# EUROPEAN PATENT SPECIFICATION

(11) **EP 2 156 728 B1**
(45) Date of publication and mention of the grant of the patent: **08.10.2014**
(21) Application number: 09010155.1
(22) Date of filing: 06.08.2009
(51) Int. Cl.: A01F 15/07, B65B 11/04

(54) **Bale wrapper apparatus**
Ballenwickelvorrichtung
Appareil d'enrubanneuse

(30) Priority: 21.08.2008 GB 0815267
(43) Date of publication of application: 24.02.2010
(73) Proprietor: Kuhn-Geldrop B.V., 5667 KP Geldrop (NL)
(72) Inventor: van Amstel, Leonardus, Hendrikus, Maria, NI-5663 R W Geldtrop (NL); van De Walle, Jacobus, Izaak, NL-56674 SM Nuenen (NL)
(74) Representative: Raynor, Simon Mark

(56) References cited:
- EP-A2- 0 242 975
- WO-A1-98/26648
- GB-A- 2 275 905
- US-A- 5 042 225

## Description

This invention relates to a bale wrapper apparatus for applying stretch film wrapping to an agricultural bale.

Bale wrappers are of the rotating turntable type, and also of rotating satellite arm type, and which are used to apply stretch film wrapping to enclose, in substantially air and liquid tight manner, bales of agricultural material, such as hay, straw and partly dried grass (which subsequently ferments when wrapped to form silage).

Bale wrappers are well known to those of ordinary skill in the art, and therefore will not be described in detail herein. In general terms only, a bale wrapper has a table for supporting a bale with its longitudinal axis extending generally parallel to the ground, and which operates to rotate the bale generally about its axis (a first axis) while relative rotation takes place between a film dispenser reel and the table about a second axis which extends substantially perpendicular to the first axis during a wrapping cycle.

A bale wrapper apparatus may be an independently operated machine, carrying out wrapping of a bale only, or it may be incorporated in a combined or integrated machine which is able to carry out bale-formation and bale wrapping in a single machine.

It is usual to provide a pre-stretcher unit in the path of travel of a length or strip of film as it is withdrawn from a dispenser reel to be applied as overlapping pre-stretched windings to envelope the bale during the wrapping cycle. The pre-stretched film subsequently tightens itself onto the outer surface of the bale under the action of the elastic energy stored in the pre-stretched windings, after completion of the wrapping cycle and cutting of the film strip from the dispenser, so as to form a tight enclosure of the bale.

The pre-stretcher generally comprises two spaced-apart rollers around which the film passes, which rotate at different circumferential speeds to stretch the film. The film strip is withdrawn from the dispenser reel, and passed through the pre-stretcher unit, under the action of a so-called "application force" generated by the relative rotation about the second axis, and rotation of the bale about its axis by the table. As mentioned, above passage of the film strip through the pre-stretcher unit causes elongation of the film prior to application of the film strip as successive overlapping windings on the bale. In this way, successive layers of coverage of film are applied to the bale.

The application force is mainly determined by the stretch ratio created in the pre-stretcher (e.g. the difference in circumferential speed of the rollers). Only a small part is determined by the unwinding force needed for unrolling the film from the reel.

Increasing the stretch ratio provides certain benefits. In particular, the greater the stretch ratio, the more elongation of the film, the thinner the film, so the more economical the use of film.

Also, the greater the stretch ratio, the higher the application force, the more tightly the strip is applied to the bale, so the better the air tightness of the bale.

However, an excessive application force and thinness of the film has a negative effect on puncture and tear resistance: it weakens the film too much so that bale contents may puncture the film, or ground stubble may puncture a wrapped bale after discharge onto the ground, or the film may tear during application. It is therefore usually necessary to have a compromise in setting the stretch ratio so as to provide a) satisfactory tightness of the wrapped bale and economic usage of film and b) sufficient resistance to puncturing and tearing.

Furthermore, excessive thinness of the film increases the rate at which the film degrades and breaks down when exposed to ultraviolet (UV) light, for example in sunlight. Excessive stretching of the film therefore has to be avoided, which mitigates against economical film usage.

The stretch ratio is therefore usually set at an optimum level to provide risk-free elongation of the film strip, which will be determined by the size and shape of the bale, its speed of rotation about its longitudinal axis, the relative speed of rotation about the second axis, the prevailing temperature and the nature of any potentially puncturing material (stubble). For hot climates and/or the wrapping of rectangular bales a stretch ratio of about 1.5 - 1.6 is usual, whereas for colder climate regions and/or the wrapping of round bales a stretch ratio of about 1.7 can be used.

It is also known to provide power-driven pre-stretcher units: these have the function of applying torque to the pre-stretcher unit, which therefore reduces the "application force".

A power-driven pre-stretcher unit is similar to a standard (non-powered) pre-stretcher unit, except that it is provided with a power source. The power source adds torque to a drive roller of the pre-stretcher unit, and this torque exerts a force which is a part (but not all) of the stretching force required to stretch the film. Therefore, the pull-off force (the application force) is reduced. The torque applied to the pre-stretcher unit, in all circumstances, never equals or exceeds the torque which would be required to provide the entire elongation force, since this would result in unwanted unrolling of the film. The torque applied to the pre-stretcher unit therefore reduces the proportion of the "application force" which otherwise would be required (in the absence of the power source).

Given that the "application force" is no longer required to cause 100% of the stretching force on the film the windings can be applied to the bale less tightly i.e. under less tensile pulling force from the bale. This makes for a gentler wrapping action, with less tensile force applied to the film strip as it forms successive overlapping windings around the bale, and therefore there is less risk of puncture of the film by outwardly protruding elements of the bale.

It is usual to drive the power driven pre-stretcher unit at a constant rate during the wrapping cycle, to apply necessary elongation (pre-stretching) of the film strip as it leaves the dispenser reel, and for the wrapping of the windings around the bale to be carried out under the action of the application force generated by rotation of the bale about its longitudinal axis (the first axis), and relative rotation between the bale and the dispenser about the second axis.

GB 2275905 A describes a hydraulic bale wrapper that includes a first hydraulic motor for rotating a bale and a second hydraulic motor for driving a pair of stretch rollers. The first and second hydraulic motors are connected in series so that the ratio of the output of the first and second motors is fixed.

However, it is a well known problem in wrapping of bales that the initial coverage layer(s) is usually exposed to the greatest risk of tearing or puncture, since such a layer is engaged directly with the outer surface of the bale, which often has spiky material projecting outwardly therefrom e.g. stalks of hay or straw. This means that it is necessary to ensure that the initial coverage layer is not applied too tightly: i.e. the overlapping windings are not applied under excessive tension arising from the application force. Otherwise, the tighter the wrapping, the more likely it is that the film strip may tear or be punctured by the bale material.

However, if the operating parameters are set so that the initial coverage layer is applied as a less taught winding i.e. under less tension, this means that all successive covering layers will be applied under substantially the same tension. This is not necessary since the subsequent layers of coverage can be applied under greater tension than the first coverage layer, because they do not come into direct contact with bale contents.

It follows that, with existing bale wrapping techniques (with or without a power driven pre-stretcher unit), the full wrapping cycle consumes more film than is strictly required, since the subsequent layers are applied under the same tension as the initial coverage layer.

In one embodiment, the present invention addresses this problem and provides a unique combination in a bale wrapper apparatus, whereby the coverage layers of the wrapping of the bale can be applied under different tensile forces during the wrapping cycle, so as to optimise usage of film while still providing satisfactory initial coverage of the bale.

In another embodiment, the present invention provides a unique combination in a bale wrapper apparatus, whereby the coverage layers of the wrapping of the bale can be applied different stretch ratios during the wrapping cycle, so as to optimise usage of film while increasing its resistance to UV degradation.

According to one aspect of the invention there is provided a bale wrapper apparatus for applying stretch film wrapping to an agricultural bale and which comprises:
a table for supporting the bale with its longitudinal axis extending substantially parallel to the ground, and for rotating the bale about its axis during a wrapping cycle;
a holder arrangement for a dispenser of stretchable film;
means for causing relative rotation between the table and the holder arrangement about a second axis extending substantially perpendicular to the axis of the bale so that film can be withdrawn under tension from the dispenser and can be applied as overlapping windings of film on the bale to form successive coverage layers of wrapping on the bale during the wrapping cycle;
a pre-stretcher unit arranged along the path of travel of film from the dispenser to the outer surface of the bale, and operative to engage the film and apply a pre-stretching force to the film so that the latter undergoes elongation prior to application to the bale, whereby upon completion of the wrapping cycle the windings of film can tighten themselves onto the bale by release of some of the elastic energy stored in the pre-stretched film; and
a controllable power source comprising a motor and a control device coupled to the motor, said control device being programmed to vary the torque applied to the pre-stretcher unit during the wrapping cycle, whereby the film is applied to the bale under different tensile forces.

A bale wrapper apparatus according to the invention can therefore be controlled in its operation to provide optimum wrapping of a bale, in that the layers of coverage of the bale can be applied more or less tightly according to requirements of the user.

In a preferred arrangement, the torque applied to the pre-stretcher unit may exert a maximum pre-stretching force to the film during application of the initial coverage layer or layers, so that relatively loose initial windings are applied to the bale, with less risk of puncturing by bale contents (particularly during sudden transition of the windings along an edge of the bale from one face to another e.g. during engagement with a corner region of a rectangular bale).

However, after the initial coverage layer(s) has been applied (relatively loosely), the pre-stretching force exerted by the power source can be reduced, so that subsequent coverage layers are applied under greater tension and therefore more tightly, giving more economical usage of film, and improved air and water tightness of the wrapped bale.

The controllable power source may take any suitable form, to provide any required operating program for any given wrapping cycle to suit particular crop and conditions.

Conveniently, the power source may have an adjustment capability, to enable the pre-stretching force exerted by the power pre-stretcher unit to vary at predetermined stages in the wrapping cycle.

A bale wrapper apparatus according to the invention may be of the rotating turntable type, or the rotating satellite arm type.

Also, a bale wrapper apparatus according to the invention may be incorporated in an integrated baling and wrapping machine.

Furthermore, a bale wrapper apparatus according to the invention preferably applies a pre-stretching force at a ratio of more than 1.7 in order to enhance the economic benefits. Also, a control is preferably provided to vary the stretch ratio during the wrapping cycle to support the advantages obtained, as described, by variation of the power source.

Preferably, the apparatus is controllable to provide a reduced stretch ratio during a final part of the wrapping cycle. This results in increased film thickness for the outermost layers, which increases the UV resistance of the wrapping.

A preferred embodiment of bale wrapper apparatus according to the invention will now be described in detail, by way of example only, with reference to the accompanying drawings, in which:
Figure 1 is a schematic perspective illustration of the basic operating principles of a bale wrapper apparatus;
Figure 2 is a plan view of a power pre-stretcher unit cooperating with a holder for a dispenser of stretch film, in a preferred embodiment of apparatus according to the invention; and
Figure 3 is a schematic side view illustration of the film dispenser and power driven pre-stretcher unit showing the operation thereof.

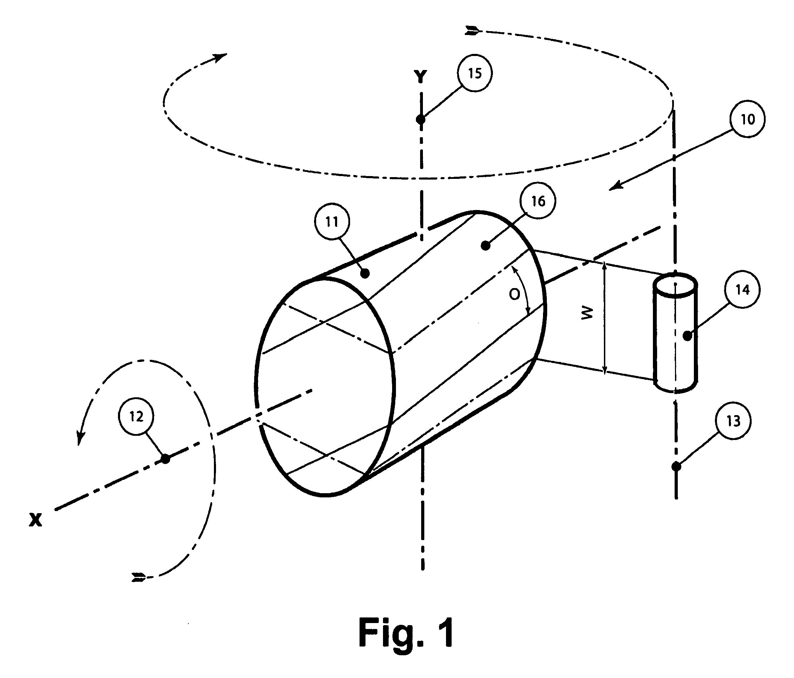

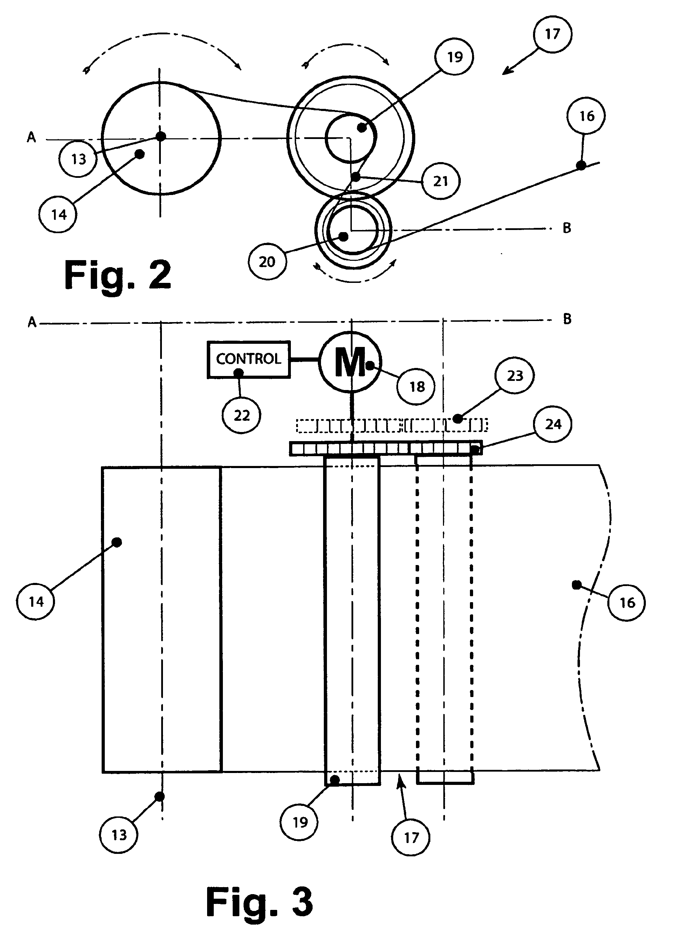

Referring first to Figure 1 of the drawings, this is a diagrammatic illustration showing the operating principle of a bale wrapper apparatus according to the invention, and which will first be described, to set out the background to the description of the preferred embodiment shown in Figures 2 and 3.

A bale wrapper apparatus according to the invention is designated generally by reference 10, and is intended to apply stretch film wrapping to an agricultural bale, which usually will be of cylindrical form, when it takes the form of a "round bale", or can be of rectangular cross section, when formed in a pressing chamber of a baler.

The apparatus 10 has a table (not shown) for supporting a bale 11 with its longitudinal axis 12 extending substantially parallel to the ground, and the rollers and/or belt (not shown) of the table are driven to rotate the bale 11 about its axis 12 during a wrapping cycle.

A holder arrangement 13 is provided which holds a dispenser 14 of stretchable film, from which a length of film strip can be withdrawn under tension so as to be applied as overlapping windings of film on the bale 11 to form successive coverage layers of wrapping on the bale during the wrapping cycle.

Means is provided to cause relative rotation between the table and the holder arrangement 13 about a second axis 15 which extends substantially perpendicular to the axis 12 of the bale 11.

The relative rotation about the second axis 15 can be achieved by rotation of a turntable about axis 15, when the bale wrapper apparatus is of the rotating turntable type.

Alternatively, in a satellite arm type bale wrapper apparatus, the holder arrangement 13 is caused to orbit around the axis 15, simultaneous with rotation of the bale 11 about its axis, so that successive overlapping windings 16 of film can be applied to the cylindrical outer surface, and the planar end faces of the bale 11. As shown in Figure 1, there is successive lateral overlap between each winding 16 shown by reference O.

A preferred embodiment of bale wrapper apparatus according to the invention will now be described with reference to Figures 2 and 3, and corresponding parts are given the same reference numerals as per Figure 1.

In the embodiment of Figures 2 and 3, a power-driven pre-stretcher unit 17 is provided, which is arranged along the path of travel of film from the dispenser 14 to the outer surface of the bale, and which is operative to engage the film and apply a pre-stretching force to the film so that the latter undergoes elongation prior to application to the bale. Thus, upon completion of the wrapping cycle, the windings 16 of film can tighten themselves onto the bale by release of some of the elastic energy stored in the pre-stretched film.

The pre-stretcher unit 17 includes a motor 18 which applies torque to an intermediate transfer roller 19. A stretching roller 20 is driven by gear wheel set 23 or 24 to rotate at a higher speed than intermediate transfer roller 20 so as to apply a part of a required pre-stretching force on the run of film 21 which passes between rollers 19 and 20 (the remainder of the pre-stretching force is derived from the "application force").

A control device 22 is coupled with motor 18, and is operative to vary the torque applied to the pre-stretcher unit 17 during the wrapping cycle. Optionally, the control device may also be coupled to other parts of the bale wrapper apparatus and operative to control overall operation of the apparatus. For example, it may be operative to control the relative rates of rotation of the bale and/or the film dispenser about the first and second axes of rotation.

In a preferred arrangement, the control device 22 controls the operation of the apparatus so as to provide optimum wrapping of the bale, in that the layers of coverage of the bale can be applied more or less tightly according to requirements of the user, during each wrapping cycle.

In one preferred embodiment, the torque applied by the motor 18 to the pre-stretcher unit 17 is a maximum during application of the initial coverage layer(s), so that relatively loose initial windings 16 are applied to the bale with less risk of puncturing by the bale contents, particularly during the sudden transition of the windings along one edge of the bale e.g. either of the opposed circular edges, from one face to another. However, after the initial coverage layer or layers have been applied relatively loosely, the torque applied to the pre-stretcher unit 17 is reduced, so that subsequent coverage layers are applied under greater tension and therefore more tightly, giving more economical usage of film.

In another preferred embodiment, the torque applied by the motor 18 to the pre-stretcher unit and/or the rotation speeds of the bale and/or the dispenser about the first and second axes of rotation can be adjusted to alter the overall stretch ratio of the film at different stages of the wrapping cycle. This allows the thickness of the film layers to be adjusted. It is then possible, for example, to increase the film thickness for the final/outermost layers, so increasing their resistance to UV degradation.

The control device 22 can take any suitable programmable form, to provide any required operating programme for a given wrapping cycle to suit particular crops or conditions.

The control device 22 can have an adjustment capability, to enable the torque applied to the pre-stretcher unit 17 at predetermined stages in the wrapping cycle to be adjusted.

A bale wrapper apparatus according to the invention can be of the rotating turntable type, or the satellite arm type. Additionally, a bale wrapper apparatus according to the invention may be incorporated in an integrated baler and wrapping machine.

The control means 22 and motor 18 therefore comprise a controllable power source operative to apply variable torque to drive the pre-stretcher unit 17 during the wrapping cycle. The greater the torque applied by the motor 18 to the pre-stretcher unit 17, the smaller will be the requirement of the "application force" to exert pre-stretching force on the film strip. In other words, the greater the torque applied, the lesser will be the requirement for the application force to contribute to the requirement for elongation force applied to the film strip. However, the torque applied will always produce a smaller elongation force than is required, so that some contribution will always be provided by the application force, derived from the rotation of the bale during the wrapping process.

Further, the control of the operation of the motor 18 may be combined with a control programme which is set so that the thickness of the film produced during its elongation can be varied, e.g. by changing the wheel sets 23, 24 to different ratios, and also at required stages in the wrapping cycle (so as to obtain similar advantages to those described by variation of the application force).

## Claims

1. A bale wrapper apparatus (10) for applying stretch film wrapping to an agricultural bale (11) and which comprises:
a table for supporting the bale (11) and rotating the bale about a first axis (12) that extends substantially parallel to the ground during a wrapping cycle;
a holder arrangement (13) for a dispenser (14) of stretchable film;
means for causing relative rotation between the table and the holder arrangement (13) about a second axis (15) extending substantially perpendicular to the first axis (12) so that film can be withdrawn under tension from the dispenser (14) and applied as overlapping windings (16) of film on the bale (11) to form successive coverage layers of wrapping on the bale during the wrapping cycle; and
a pre-stretcher unit (17) arranged along the path of travel of film from the dispenser (14) to the outer surface of the bale (11), and operative to engage the film (21) and apply a pre-stretching force to the film so that the latter undergoes elongation prior to application to the bale, whereby upon completion of the wrapping cycle the windings (16) of film can tighten themselves onto the bale by release of some of the elastic energy stored in the pre-stretched film (21);
**characterised by** a controllable power source (18, 22) comprising a motor (18) and a control device (22) coupled to the motor (18), said control device (22) being programmed to vary the torque applied to the pre-stretcher unit (17) during the wrapping cycle, whereby the film is applied to the bale under different tensile forces.

2. Apparatus according to claim 1, in which the controllable power source (18, 22) is operative to apply maximum torque to the pre-stretcher unit during application of the initial coverage layer(s).

3. Apparatus according to claim 2, in which the controllable power source (18, 22) is operative to apply a reduced torque to the pre-stretcher unit (17) after the initial coverage layer(s) has been applied to the bale.

4. Apparatus according to any one of claims 1 to 3, in which the controllable power source has an adjustment capability, to enable the torque applied to the pre-stretcher unit (17) at predetermined stages in the wrapping cycle to be adjusted.

5. Apparatus according to any one of claims 1 to 4, in which the apparatus is controllable to provide a stretch ratio of more than 1.7 during at least part of the wrapping cycle.

6. Apparatus according to any one of claims 1 to 5, in which the apparatus is controllable to provide a variation of the stretch ratio during the wrapping cycle.

7. Apparatus according to claim 6, in which the apparatus is controllable to provide a reduced stretch ratio during a final part of the wrapping cycle.

8. Apparatus according to any one of the preceding claims, in which controllable power source (18, 22) is configured to reduce the tensile force in the film as it is applied to the bale.

## Patentansprüche

1. Ballenwickelapparat (10) zum Anbringen einer Wickelung aus Streckfolie um einen landwirtschaftlichen Ballen (11), umfassend:
einen Tisch zur Aufnahme und zum Drehen des Ballens (11) um eine erste Achse (12), die im Wesentlichen während eines Wickelzyklus parallel zum Boden liegt;
einen Halter (13) für einen Spender von Streckfolie (14);
eine Vorrichtung zur Erzeugung einer relativen Bewegung zwischen Tisch und Halter(13) um eine zweite Achse (15), die im Wesentlichen senkrecht zur ersten Achse (12) steht, damit die Folie unter Spannung vom Spender (14) genommen und in Form einander überlappender Lagen (16) um den Ballen (11) gewickelt werden kann, um so im Verlauf des Wickelzyklus eine mehrschichtig gewickelte Verpackung des Ballens zu bilden; und
eine Vorstreck-Vorrichtung (17) im Verlauf der Folienstrecke zwischen dem Spender (14) und der Oberfläche des Ballens (11), die dazu dient, die Folie (21) festzuhalten und darauf eine Streckkraft auszuüben, so dass die Folie vor dem Auftragen auf die Ballenoberfläche in die Länge gezogen wird, damit sich die Lagen der Wickelung (16) nach Abschluss des Wickelungszyklus durch Freisetzen eines Teils der durch die Vorstreckung gespeicherten elastischen Energie selbst spannen können (21);
**gekennzeichnet durch** eine steuerbare Kraftquelle (18, 22), bestehend aus einem Motor (18) und einer damit verbundenen Steuervorrichtung (22), wobei diese Vorrichtung zum Variieren der auf die Vorstreck-Vorrichtung (17) ausgeübten Spannkraft dient, so dass die Folie mit unterschiedlicher Vorspannung auf den Ballen gewickelt werden kann,

2. Apparat gemäß Anspruch 1, bei dem die steuerbare Kraftquelle (18, 22) dazu dient, beim Auftragen der ersten Folienlage(n) die größtmögliche Spannkraft auf die Vorstreckvorrichtung auszuüben.

3. Apparat gemäß Anspruch 2, bei dem die steuerbare Kraftquelle (18, 22) dazu dient, nach dem Auftragen der ersten Folienlagen auf den Ballen eine verminderte Spannkraft auf die Vorstreckvorrichtung (17) auszuüben.

4. Apparat gemäß einem der Ansprüche 1 bis 3, bei dem die steuerbare Kraftquelle eine Einstellmöglichkeit zur Regelung der auf die Vorstreckvorrichtung (17) ausgeübten Spannkraft in vordefinierten Abstufungen im Verlauf des Wickelzyklus ermöglicht.

5. Apparat gemäß einem der Ansprüche 1 bis 4, wobei der Apparat so weit steuerbar ist, dass zumindest während eines Teils des Wickelzyklus eine Vorstreckung der Folie um den Faktor 1, 7 ermöglicht wird.

6. Apparat gemäß einem der Ansprüche 1 bis 5, der so steuerbar ist, dass in der Schlussphase des Wickelzyklus ein Variieren des Vorstreckungsfaktors der Folie ermöglicht wird.

7. Apparat gemäß Anspruch 6, der so steuerbar ist, dass ein verringerter Vorstreckfaktor am Ende des Wickelzyklus ermöglicht wird.

8. Apparat gemäß einem der vorhergehenden Ansprüche, bei dem die steuerbare Kraftquelle (18, 22) so konfiguriert ist, dass sie die Spannkraft der Folie während des Wickelns auf den Ballen vermindern kann.

## Revendications

1. Appareil d'emballage de balles (10) pour appliquer un emballage avec film étirable sur une balle agricole (11) et qui comprend :
une table pour soutenir la balle (11) et faire tourner la balle autour d'un premier axe (12) qui s'étend substantiellement en parallèle au sol au cours d'un cycle d'emballage ;
un dispositif de support (13) pour un distributeur (14) du film étirable ;
des moyens pour provoquer une rotation relative entre la table et le dispositif de support (13) autour d'un second axe (15) s'étendant substantiellement en perpendiculaire au premier axe (12) de sorte que le film peut être retiré sous tension du distributeur (14) et appliqué en tant qu'enroulements à chevauchement (16) de film sur la balle (11) afin de former des couches de couverture successives d'emballage sur la balle au cours du cycle d'emballage ; et
une unité de pré-étirage (17) disposée le long de la trajectoire de film à partir du distributeur (14) vers la surface externe de la balle (11), et opérationnelle afin de mettre en prise le film (21) et d'appliquer une force de pré-étirage sur le film de telle sorte que celui-ci subit un allongement avant l'application sur la balle, grâce à quoi lors de l'achèvement du cycle d'emballage les enroulements (16) de film peuvent se serrer sur la balle par la libération d'une partie de l'énergie élastique stockée dans le film pré-étiré (21) ;
**caractérisé par** une source d'alimentation contrôlable (18, 22) comprenant un moteur (18) et un dispositif de commande (22) couplé au moteur (18), ledit dispositif de commande (22) étant programmé pour faire varier le couple appliqué sur l'unité de pré-étirage (17) au cours du cycle d'emballage, grâce à quoi le film est appliqué sur la balle sous différentes forces de traction.

2. Appareil selon la revendication 1, dans lequel la source d'alimentation contrôlable (18, 22) est opérationnelle afin d'appliquer le couple maximal sur l'unité de pré-étirage pendant l'application de la ou des couches de couverture initiales.

3. Appareil selon la revendication 2, dans lequel la source d'alimentation contrôlable (18, 22) est opérationnelle afin d'appliquer un couple réduit sur l'unité de pré-étirage (17) après que la ou les couches de couverture initiales aient été appliquées sur la balle.

4. Appareil selon une quelconque des revendications 1 à 3, dans lequel la source d'alimentation contrôlable possède une capacité d'ajustement, afin de permettre au couple appliqué sur l'unité de pré-étirage (17) à des stades prédéterminés dans le cycle d'emballage d'être ajusté.

5. Appareil selon une quelconque des revendications 1 à 4, dans lequel l'appareil est contrôlable afin de prévoir un rapport d'étirage de plus de 1,7 au cours d'au moins une partie du cycle d'emballage.

6. Appareil selon une quelconque des revendications 1 à 5, dans lequel l'appareil est contrôlable afin de prévoir une variation du rapport d'étirage au cours du cycle d'emballage.

7. Appareil selon la revendication 6, dans lequel l'appareil est contrôlable afin de prévoir un rapport d'étirage réduit au cours d'une partie finale du cycle d'emballage.

8. Appareil selon une quelconque des revendications précédentes, dans lequel la source d'alimentation contrôlable (18, 22) est configurée afin de réduire la force de traction dans le film tandis qu'il est appliqué sur la balle.
